# EUROPÄISCHE PATENTANMELDUNG

(11) **EP 2 042 446 A1**
(43) Veröffentlichungstag der Anmeldung: **01.04.2009**
(21) Anmeldenummer: 08016845.3
(22) Anmeldetag: 25.09.2008
(51) Int. Cl.: B65G 1/137

(54) **Vorrichtung zum Ein- und Auslagern von Stückgütern und insbesondere Arzneimittelpackungen**

(30) Priorität: 25.09.2007 DE 202007013479 U
(71) Anmelder: KHT Kommissionier- und Handhabungstechnik GmbH, 45881 Gelsenkirchen (DE)
(72) Erfinder: Gessner Jürgen, 42781 Haan (DE)
(74) Vertreter: Tilmann, Max Wilhelm

(57) **Zusammenfassung**

Die Erfindung betrifft eine Vorrichtung zum Ein- und Auslagern von Stückgütern, insbesondere von Arzneimittelpackungen, mit mindestens einem Regal mit Fachböden (2) zur Lagerung der Stückgüter, wobei die Fachböden physikalisch in Kanäle unterteilt sind, mindestens einer Transportvorrichtung (3) für einen Transport der Stückgüter entlang des Regals zu einem Abgabeplatz und mindestens einem Regalbediengerät für ein Ein- und Auslagern der gelagerten Stückgüter, wobei die in Kanäle unterteilten Fachböden in einer fallunkritischen Höhe über und entlang der Transportvorrichtung angeordnet sind.

## Beschreibung

Die Erfindung betrifft eine Vorrichtung zum Ein- und Auslagern von Gütern, insbesondere von Arzneimittelpackungen.

Eine solche Vorrichtung ist beispielsweise in der DE 195 09 951 C2 offenbart. Diese Vorrichtung, die insbesondere zur automatischen unsortierten Lagerung von kleinteiligen, quaderförmigen Packungen wie Arzneimittelpackungen vorgesehen ist, weist eine Übergabevorrichtung in Form eines Endlos-Förderers auf, der sich innerhalb eines Regals zwischen zwei Regalböden erstreckt und die einzulagernden Gegenstände von einer Aufgabestation bis in den Arbeitsbereich eines Regalbediengeräts führt. Der Endlos-Förderer, der insbesondere als Förderband ausgebildet ist, führt dabei von der Schmalseite der Regalanlage, an der eine Aufgabestation für die Packungen angeordnet ist, in den mit zahlreichen übereinander angeordneten Regalböden versehenen Regalbereich hinein. Die neu einzulagernden Gegenstände werden vor der Aufnahme durch das Regalbediengerät mittels eines Barcode-Scanners identifiziert und hinsichtlich ihrer Abmessungen vermessen, so daß ein geeigneter Lagerplatz von einer Rechnersteuerung der Lagervorrichtung gefunden werden kann.

Sowohl die Identifizierung als auch die Vermessung der Gegenstände kann in an sich bekannter Weise vollständig maschinell ausgeführt werden. Zur Verminderung des Anlagenaufwandes ist es jedoch vielfach üblich, die Identifizierung im Rahmen eines Handhabungsvorgangs von einer Bedienperson vornehmen zu lassen, die den Barcode des Gegenstands an einem entsprechenden Lesegerät vorbeiführt und dann den Gegenstand auf den Endlos-Förderer auflegt. Nach Beendigung des Auflegens neu einzulagernder Gegenstände oder nach Erreichen einer vollständigen Belegung des Endlos-Förderers, auf dem die Gegenstände einzeln nebeneinander im Abstand aufgelegt sind, werden die Gegenstände nacheinander durch das Regalbediengerät aufgenommen und auf einen freien Lagerplatz eines der Regalböden eingelagert. Die Positionen, an denen die einzelnen Gegenstände auf dem Endlos-Förderer liegen, werden in der Rechnersteuerung für den gezielten Zugriff des Regalbediengeräts gespeichert.

Die Regalböden bei der Vorrichtung der DE 195 09 951 C2 sind über die gesamte Länge des Regals durchgehend ausgebildet und dienen der unsortierten Lagerung der darauf liegenden Stückgüter; das heißt, die Stückgüter, deren Verpackungen unterschiedliche Größen aufweisen können, werden unsortiert in den Regalen nebeneinander, hintereinander und zum Teil auch übereinander abgelegt. Wird eines der Stückgüter im Folgenden wieder ausgelagert, entsteht ein freier Lagerplatz, dessen Größe in der Rechnersteuerung der Lagervorrichtung gespeichert ist. Hierdurch kann dieser Lagerplatz wiederum mit einem neu einzulagernden Stückgut belegt werden, das genauso groß oder kleiner als das zuvor auf dem entsprechenden Lagerplatz gelagerte Stückgut ist.

Es existieren weiterhin Vorrichtungen zur automatisierten Ein- und Auslagerung von Gütern, bei den die Stückgüter sortiert in in Kanäle unterteilten Regalböden gelagert sind. Eine solche Lagerung bietet sich insbesondere für Stückgüter an, die in größerer Stückzahl vorhanden sind und insbesondere auch gleichzeitig in größerer Stückzahl angefordert werden. Bei entsprechendem Bedarf können gleichzeitig mehrere identische Stückgüter ausgelagert werden. Dies erfolgt in der Regel mittels einer in die Kanäle integrierten Auswurfvorrichtung, die die benötigte Anzahl an Stückgütern aus dem jeweiligen Kanal abgibt, so daß diese auf eine darunter angeordnete Transportvorrichtung, beispielsweise ein Transportband fallen, womit diese zu einer Ausgabestelle transportiert werden. Durch den freien Fall aus gegebenenfalls großer Höhe können die Stückgüter jedoch beschädigt oder zerstört werden. Aus diesem Grund ist es auch bekannt, die Transportvorrichtung vertikal verfahrbar auszubilden, damit diese stets in einer unkritischen Fallhöhe unterhalb des gerade zu leerenden Kanals positioniert ist. Eine solche Vorrichtung ist beispielsweise aus der DE 196 35 396 C2 bekannt. Die Integration einer solchen Hubachse ist jedoch mit hohen Kosten verbunden.

Eine sortierte Lagerung und die gleichzeitige Betätigung mehrerer Kanäle ermöglicht das gleichzeitige Auslagern mehrerer Stückgüter in einem Auslagerungsvorgang des Automaten. Im Gegensatz dazu wäre bei der Vorrichtung der DE 195 09 951 C2 aufgrund der unsortierten Lagerung der Stückgüter und der spezifischen Ausbildung des Regalbediengeräts, das lediglich das Greifen eines einzigen Stückguts (bzw. mehrerer geometrisch zueinander passender und entsprechend hintereinander liegender Stückgüter) erlaubt, eine der Anzahl der angeforderten Stückgüter entsprechende Anzahl an Auslagerungsvorgängen erforderlich.

Es gibt weiterhin Lager, in denen beide Arten der Lagerung der Stückgüter zum Einsatz kommen. Insbesondere in Apothekenlagern wird ein Teil der Waren, der in relativ großer Stückzahl vorhanden ist (der in absoluten Stückzahlen jedoch häufig den geringere Anteil ausmacht) und auf den häufig zugegriffen wird, in die in Kanäle unterteilten Regalböden gelagert, während der übrige Teil der Stückgüter, der lediglich in geringen Einzelmengen vorrätig gehalten wird, unsortiert auf durchgehenden Regalböden abgelegt wird. Die Integration der in Kanäle unterteilten Regalböden erfolgt dabei in der Regel durch den Austausch einer oder mehrerer Regalsäulen des Regalsystems. Dabei bleiben jedoch die bereits beschriebenen Nachteile - die kritische Fallhöhe beziehungsweise die Notwendigkeit einer vertikalen Verfahrbarkeit des Sammelbandes /Transportbandes - bestehen.

Ausgehend von diesem Stand der Technik liegt der Erfindung die Aufgabe zugrunde, eine gattungsgemäße Vorrichtung so weiterzuentwickeln, daß zumindest einer der aus dem Stand der Technik bekannten Nachteile verringert wird. Insbesondere soll eine Integration von einem Teil der Regalböden möglich sein, die in Kanäle unterteilt sind, jedoch ohne daß eine vertikale Verfahrbarkeit einer Transportvorrichtung notwendig ist; gleichzeitig soll eine kritische Fallhöhe für die Stückgüter nicht überschritten werden.

Diese Aufgabe wird durch den Gegenstand des unabhängigen Anspruchs gelöst. Vorteilhafte Ausführungsformen sind Gegenstand der abhängigen Ansprüche.

Der Kern der Erfindung sieht vor, bei einer Vorrichtung zum Ein- und Auslagern von Stückgütern, insbesondere von Arzneimittelpackungen, die mindestens ein Regal mit Fachböden zur Lagerung der Stückgüter aufweist, wobei die Fachböden teilweise mittels Trennwänden in vorzugsweise den Abmessungen der jeweiligen Stückgüter angepaßte Kanäle unterteilt oder durch einzelne Kanäle ersetzt sind, und die weiterhin mindestens eine Transportvorrichtung für einen Transport der Stückgüter entlang des Regals zu einem Abgabeplatz und mindestens ein Regalbediengerät für das Ein- und Auslagern der Stückgüter aufweist, die vorzugsweise in Kanäle unterteilten Fachböden in einer für das Fallen der Stückgüter unkritischen Höhe (fallunkritische Höhe) über und entlang der Transportvorrichtung anzuordnen.

Durch die Anordnung der vorzugsweise in Kanäle unterteilten Fachböden in fallunkritischer Höhe kann eine Beschädigung von aus den Kanälen fallenden Stückgütern im Wesentlichen verhindert werden. Durch die Anordnung dieser Fachböden entlang der Transportvorrichtung kann zudem ein ausreichender Stauraum für die sortiert zu lagernden Stückgüter erreicht werden. Diese Stückgüter können hierbei nach Art und gegebenenfalls Größe in den einzelnen Kanälen gelagert werden. Selbstverständlich ist auch eine andere beliebige Sortierung möglich, beispielsweise anhand thematisch zusammenhängender Gruppen, bzw. Stückgüter, die immer gemeinsam ausgegeben werden. Die übrigen Fachböden des Regals, die gegebenenfalls zumindest teilweise in einer fallkritischen Höhe angeordnet sind, können dagegen bevorzugt für das unsortierte Lagern von Stückgütern verwendet werden. Diese Stückgüter können - wie es aus dem Stand der Technik bekannt ist - mit dem Regalbediengerät einzeln ein- beziehungsweise ausgelagert werden.

Die Festlegung der fallunkritischen Höhe hängt insbesondere von der Art beziehungsweise der Empfindlichkeit der einzulagernden Stückgüter ab und bewegt sich beispielsweise bei Arzneimittelpackungen in einem Bereich bis zu 40 cm über der Transportvorrichtung. Diese Höhe kann durchaus eine Mehrzahl von übereinander angeordneten, in Kanäle unterteilten Fachböden umfassen. Hierdurch können beispielsweise hochempfindliche Stückgüter in den unteren, das heißt den näher an der Transportvorrichtung positionierten Fachböden gelagert werden, während die weniger empfindlichen Stückgüter in den darüber angeordneten Fachböden untergebracht sind.

Erfindungsgemäß müssen die in Kanäle unterteilten Fachböden nicht entlang ihrer Gesamtlänge in Kanäle unterteilt sein; vielmehr ist eine Unterteilung in Kanäle auch lediglich auf Abschnitten dieser Fachböden möglich. Die einzelfallabhängige Aufteilung des Regals in Fachböden mit Unterteilung in Kanäle und solche ohne Unterteilung kann insbesondere durch die absolute Menge an in Kanälen zu lagernden Stückgütern und der Anzahl von sich unterscheidenden Stückgütern abhängen.

Grundsätzlich ist es nicht ausgeschlossen, daß nicht alle der in Kanäle unterteilten Fachböden in fallunkritischer Höhe angeordnet sind; vorzugsweise ist dies jedoch der Fall.

Vorzugsweise weist das Regalbediengerät eine Greifvorrichtung zum Klemmgreifen der Stückgüter auf, da sich eine solche besonders zum unsortierten Einlagern solcher Güter eignet. Eine solche Greifvorrichtung kann auf verschiedene, aus dem Stand der Technik bekannte Arten ausgebildet sein. Beispielsweise kann eine solche Greifvorrichtung als Backengreifer oder auch als Saughaltevorrichtung ausgebildet sein.

Weiterhin ist die Transportvorrichtung bevorzugt als Transportband ausgebildet. Ein solches Transportband kann sich insbesondere entlang der gesamten Regallänge erstrecken. Weiterhin wird durch ein solches Transportband ermöglicht, gleichzeitig an mehreren Stellen entlang des Regals Stückgüter auszulagern. Selbstverständlich kann die Transportvorrichtung auch beliebig anders ausgebildet werden, beispielsweise als horizontal verfahrbarer Transportbehälter.

In einer weiterhin bevorzugten Ausführungsform der vorliegenden Erfindung wird die Transportvorrichtung in einer Abgabehöhe angeordnet, daß heißt in einer solchen Höhe, in der die Stückgüter bequem von einer Bedienperson erreicht werden können. Dadurch kann verhindert werden, daß die Stückgüter beispielsweise mittels eines Lifts zwischen dem Bereitstellungsplatz und der Transportvorrichtung horizontal transportiert werden müssen. Gleichfalls ist es möglich, bei einem anschließenden Transport, z.B. an entfernte Arbeitsplätze, die Kanäle und damit die Transportvorrichtung über Kopf anzuordnen, so daß die sich anschließende Verbindungsfördertechnik Gehwege nicht behindert.

Vorteilhafterweise können zumindest die in Kanäle unterteilten Fachböden in Richtung der Transportvorrichtung geneigt ausgebildet sein, so daß ein Herausfallen aus den Kanälen durch die eigene Schwerkraft erfolgen oder zumindest unterstützt werden kann. Ein unbeabsichtigtes Herausfallen kann in diesem Fall durch ein entriegelbares Sperrelement am Kanalende verhindert werden. Das Entriegeln des Sperrelements kann auch durch an der Transportvorrichtung angebrachte Auslöser erfolgen, die beispielsweise den Kanalboden anheben, so dass sich die das Sperrelement zurückzieht, oder dieses wegdrücken.

Ein Auswerfen der Stückgüter kann auch durch die Integration einer Auswurfvorrichtung in die Kanäle erfolgen, so daß dies unabhängig von der Schwerkraft erfolgen kann. Eine solche Auswurfvorrichtung kann beispielsweise als Förderwendel oder Förderband ausgebildet sein. Selbstverständlich kann eine Auswurfvorrichtung auch mit geneigten Fachböden kombiniert werden. Selbstverständlich kann auch das Regalbediengerät zum Auswerfen der Stückgüter verwendet werden.

Die Erfindung wird nachfolgend anhand eines in der Zeichnung dargestellten Ausführungsbeispiels näher erläutert.

In der Zeichnung zeigt:

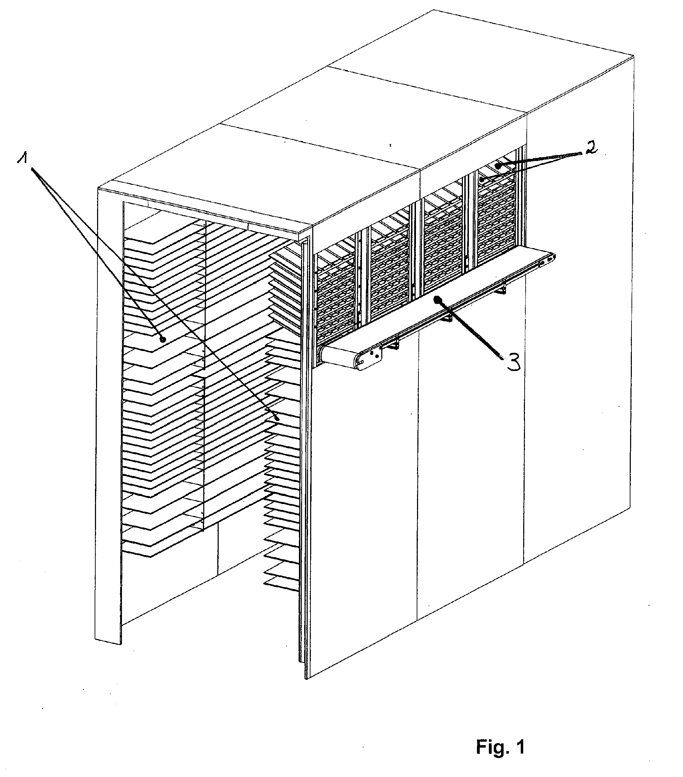

Fig. 1 eine erfindungsgemäße Vorrichtung mit Fachböden in fallunkritischer Höhe.

Die Fig.1 zeigt eine erfindungsgemäße Vorrichtung in einer Ausführungsform als automatisiertes Regalsystem für die Ein- und Auslagerung von Arzneimittelpackungen.

Das Regalsystem umfasst ein quaderförmiges, einseitig offenes Gehäuse. Entlang der zwei Längsseiten des Gehäuses ist auf dessen Innenseite eine Vielzahl von übereinander angeordneten Fachböden angeordnet, die somit ein Regal ausbilden. Zum einen sind Fachböden (1) vorgesehen, die im wesentlichen durchgehend, d.h. nicht unterteilt ausgebildet sind; eine Unterteilung ergibt sich hier lediglich durch zwei Tragwände (nur eine hiervon ist sichtbar) in den Bereichen der zwei Enden der Fachböden (1). Im oberen Bereich der in der Fig. 1 vorderen Seitenwand sind weiterhin Fachböden (1) angeordnet, die über Trennwände in eine Vielzahl von Kanälen (2) unterteilt sind. Diese Fachböden sind zudem schräg angeordnet. Alternativ können diese Fachböden jedoch auch waagerecht ausgebildet sein. Auch ist es möglich, diese Fachböden nicht in Kanäle zu unterteilen. In dem Bereich der in Kanäle (2) unterteilten Fachböden (1) ist die vordere Seitenwand des Gehäuses offen ausgebildet, so dass die in diesen Fachböden gelagerten Arzneimittelpackungen durch die Öffnung in der Seitenwand ausgelagert werden können. Hierzu sind endseitig an jedem der Kanäle (2) entriegelbare Sperrelemente vorgesehen, die im verriegelten Zustand verhindern, daß die in den Kanälen (2) hintereinander gelagerten Arzneimittelpackungen ungewollt aus den Kanälen herausrutschen. Sobald von einer Bedienperson des Regalsystems eine bestimmte Arzneimittelpackung angefordert wird, wird von einer Steuerung (nicht dargestellt) des Regalssystems das Sperrelement des entsprechenden Kanals (2) entriegelt, so daß das oder die (je nach Anforderung durch die Bedienperson) Arzneimittelpackungen den Kanal (2) des geneigten Fachbodens (1) aufgrund der Schwerkraft herunterrutschen und auf eine direkt unterhalb der Öffnung in der Gehäusewand angeordnete Transportvorrichtung (3) in Form eines Förderband fallen, mit dem diese zu einer Übergabestelle transportiert werden.

Die in Kanäle (2) unterteilten Fachböden (1) dienen der Lagerung von Arzneimittelpackungen, die grundsätzlich häufig und zudem häufig in Stückzahlen größer eins angefordert werden. Diese Arzneimittelpackungen werden daher sortiert nach Art und gegebenenfalls Größe in den einzelnen Kanälen (2) gelagert. Selbstverständlich ist auch eine andere beliebige Sortierung möglich, beispielsweise anhand thematisch zusammenhängender Gruppen, wie Kombiverschreibungen und Arzneimittelpackungen, die immer gemeinsam ausgegeben werden. Durch die sortierte Einlagerung der Arzneimittelpackungen und zudem durch deren Auslagerung durch ein Herausfallenlassen, kann besonders schnell auf diese zugegriffen werden.

Die Anordnung der in Kanäle (2) unterteilten Fachböden (1) sowie des darunter angeordneten Förderbands ist so vorgesehen, dass auch die Fallhöhe einer aus dem obersten, der in Kanäle (2) unterteilten Fachböden (1) fallenden Arzneimittelpackung für diese unkritisch ist und nicht zu einer wesentlichen Beschädigung führt.

In den übrigen, nicht geneigt angeordneten und nicht unterteilten Fachböden (1) des Regalsystems werden diejenigen Arzneimittelpackungen gelagert, die lediglich in kleiner Stückzahl vorgehalten werden und in der Regel nicht so häufig angefordert werden. Die Lagerung erfolgt dort unsortiert, d.h. die unterschiedlichen Arzneimittelpackungen werden nach einer durch Scannen erfolgenden Identifizierung von einem Regalbediengerät (nicht dargestellt) in unsortierter Reihenfolge nebeneinander, hintereinander und teilweise auch übereinander in den einzelnen Fachböden abgelegt, d.h. eingelagert, wobei die Position der einzelnen Arzneimittelpackungen in der Steuerung des Regalsystems für ein späteres Auslagern gespeichert wird. Zum Auslagern wird die angeforderte Arzneimittelpackung von dem Regalbediengerät, das zwischen den zwei Seitenwänden des Gehäuses verfahrbar angeordnet ist, gegriffen und zu einer Übergabestelle befördert, wobei der frei werden Platz in dem Fachboden (1) nachfolgend wieder durch eine Arzneimittelpackung mit identischen oder kleineren Abmessungen aufgefüllt werden kann.

## Patentansprüche

1. Vorrichtung zum Ein- und Auslagern von Stückgütern, insbesondere von Arzneimittelpackungen, mit mindestens einem Regal mit Fachböden (1) zur Lagerung der Stückgüter, wobei die Fachböden (1) vorzugsweise physikalisch in Kanäle (2) unterteilt sind, mindestens einer Transportvorrichtung (3) für einen Transport der Stückgüter entlang des Regals zu einem Abgabeplatz und mindestens einem Regalbediengerät für ein Ein- und/oder Auslagern der gelagerten Stückgüter, **dadurch gekennzeichnet, daß** die vorzugsweise in Kanäle (2) unterteilten Fachböden (1) in einer fallunkritischen Höhe über und entlang der Transportvorrichtung (3) angeordnet sind.

2. Vorrichtung gemäß Anspruch 1, **dadurch gekennzeichnet, daß** die vorzugsweise in Kanäle (2) unterteilten Fachböden (1) ausschließlich in einer fallunkritischen Höhe über und entlang der Transportvorrichtung (3) angeordnet sind.

3. Vorrichtung gemäß einem der vorhergehenden Ansprüche, **dadurch gekennzeichnet, daß** die Transportvorrichtung (3) als Transportband ausgebildet ist.

4. Vorrichtung gemäß einem der vorhergehenden Ansprüche, **dadurch gekennzeichnet, daß** die Transportvorrichtung in Abgabehöhe angeordnet ist.

5. Vorrichtung gemäß einem der vorhergehenden Ansprüche **dadurch gekennzeichnet, daß** die vorzugsweise in Kanäle (2) unterteilten Fachböden (1) in Richtung der Transportvorrichtung (3) geneigt angeordnet sind.

6. Vorrichtung gemäß einem der vorhergehenden Ansprüche, **dadurch gekennzeichnet, daß** in die Kanäle (2) eine Auswurfvorrichtung integriert ist.
